# EUROPEAN PATENT SPECIFICATION

(11) **EP 3 187 327 B1**
(45) Date of publication and mention of the grant of the patent: **22.04.2020**
(21) Application number: 15899119.0
(22) Date of filing: 13.11.2015
(51) Int. Cl.: B22F 3/105, B33Y 30/00, B33Y 50/02, B29C 64/321, B29C 64/343, B29C 64/371, B29C 64/393, B29C 64/153

(54) **THREE-DIMENSIONAL LAMINATION SHAPING APPARATUS, METHOD FOR CONTROLLING THREE-DIMENSIONAL LAMINATION SHAPING APPARATUS, AND PROGRAM FOR CONTROLLING THREE-DIMENSIONAL LAMINATION SHAPING APPARATUS**
VORRICHTUNG ZUR DREIDIMENSIONALEN LAMINIERUNG UND FORMUNG, STEUERUNGSVERFAHREN FÜR VORRICHTUNG ZUR DREIDIMENSIONALEN LAMINIERUNG UND FORMUNG UND STEUERUNGSPROGRAMM FÜR VORRICHTUNG ZUR DREIDIMENSIONALEN LAMINIERUNG UND FORMUNG
APPAREIL DE MISE EN FORME DE STRATE TRIDIMENSIONNELLE, PROCÉDÉ DE COMMANDE D'APPAREIL DE MISE EN FORME DE STRATE TRIDIMENSIONNELLE ET PROGRAMME DE COMMANDE D'APPAREIL DE MISE EN FORME DE STRATE TRIDIMENSIONNELLE

(43) Date of publication of application: 05.07.2017
(73) Proprietor: Technology Research Association for Future Additive Manufacturing, Chuo-ku, Tokyo (JP)
(72) Inventor: FURUKAWA, Tetsuyoshi, Amagasaki-shi Hyogo 661-0001 (JP)
(74) Representative: TBK
(86) International application number: PCT/JP2015/081971
(87) International publication number: WO 2017/081813

(56) References cited:
- EP-A1- 2 926 923
- EP-A2- 2 052 845
- DE-A1-102012 008 664
- JP-A- 2006 248 231
- JP-A- 2015 196 265
- US-A1- 2013 287 590
- US-A1- 2015 054 191
- US-A1- 2015 306 666

## Description

### TECHNICAL FIELD

The present invention relates to a technique of supplying a powder to a shaping chamber in a manufacturing apparatus for manufacturing a three-dimensional laminated and shaped object by laminating the powder.

### BACKGROUND ART

In the above technical field, patent literature 1 discloses a technique of storing, in advance, in a powder supply container provided in a shaping chamber, a necessary amount of powder for manufacturing a shaped object. Also, patent literature 2 discloses a technique of supplying powder from an external powder reservoir to the shaping chamber through a lock flushed by inert gas.

### CITATION LIST

### PATENT LITERATURE

Patent literature 1: Japanese PCT National Publication No. 2006-509914
Patent literature 2: EP 2 052 845 A2

### SUMMARY OF THE INVENTION

### TECHNICAL PROBLEM

The technique described in patent literature 1, however, cannot supply the powder to the shaping chamber without interrupting processing of shaping a three-dimensional laminated and shaped object. The technique in patent literature 2 is based on an inert gas atmosphere.

### SOLUTION TO PROBLEM

One aspect of the present invention provides a three-dimensional laminating and shaping apparatus according to claim 1.

Another aspect of the present invention provides a control method of a three-dimensional laminating and shaping apparatus, according to claim 11.

Still other aspect of the present invention provides a control program of a three-dimensional laminating and shaping apparatus defined in claim 1, according to claim 12.

### ADVANTAGEOUS EFFECTS OF INVENTION

According to the present invention, it is possible to supply a powder to a shaping chamber without interrupting processing of shaping a three-dimensional laminated and shaped object.

### BRIEF DESCRIPTION OF DRAWINGS

Fig. 1 is a block diagram showing the arrangement of a three-dimensional laminating and shaping apparatus according to the first embodiment of the present invention;
Fig. 2 is a view showing the arrangement of a three-dimensional laminating and shaping apparatus according to the second embodiment of the present invention;
Fig. 3 is a view for explaining the arrangement of the load lock chamber of the three-dimensional laminating and shaping apparatus according to the second embodiment of the present invention;
Fig. 4 is a view for explaining an overview of powder supply from the load lock chamber to a process chamber in the three-dimensional laminating and shaping apparatus according to the second embodiment of the present invention;
Fig. 5A is a flowchart for explaining the powder supply processing procedure of the three-dimensional laminating and shaping apparatus according to the second embodiment of the present invention;
Fig. 5B is a flowchart for explaining the powder supply processing procedure of the three-dimensional laminating and shaping apparatus according to the second embodiment of the present invention;
Fig. 6 is a view showing the arrangement of a three-dimensional laminating and shaping apparatus according to the third embodiment of the present invention; and
Fig. 7 is a view for explaining an overview of powder supply from a load lock chamber to a process chamber in the three-dimensional laminating and shaping apparatus according to the third embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

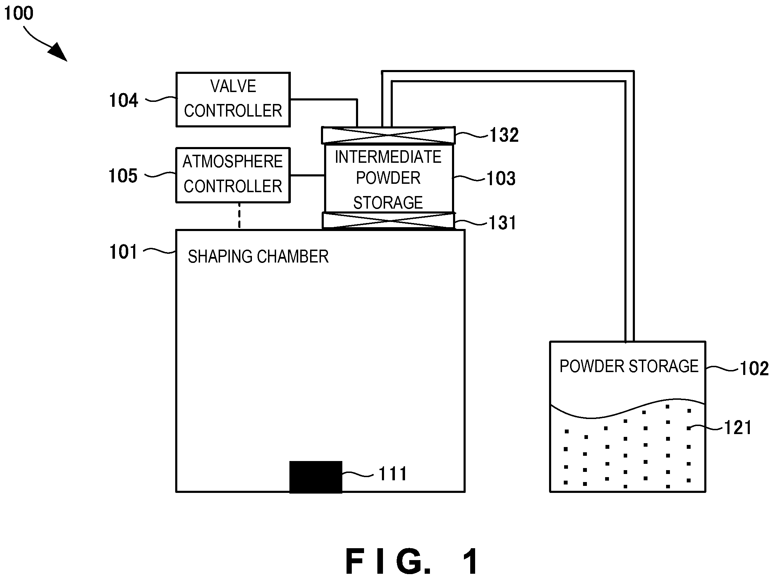

A three-dimensional laminating and shaping apparatus 100 as the first embodiment of the present invention will be described with reference to Fig. 1. The three-dimensional laminating and shaping apparatus 100 is an apparatus for manufacturing a three-dimensional laminated and shaped object 111 by laminating a powder and hardening it. As shown in Fig. 1, the three-dimensional laminating and shaping apparatus 100 includes a shaping chamber 101, a powder storage 102, an intermediate powder storage 103, a valve controller 104, and an atmosphere controller 105.

In the shaping chamber 101, the three-dimensional laminated and shaped object 111 is shaped. The powder storage 102 stores a powder 121 to be conveyed to the shaping chamber 101. The intermediate powder storage 103 is provided between the shaping chamber 101 and the powder storage 102, includes two valves 131 and 132, is connected to the shaping chamber 101 via the first valve 131 and connected to the powder storage 102 via the second valve 132, and temporarily stores the powder 121. The valve controller 104 controls opening/closing of each of the first valve 131 and the second valve 132. The atmosphere controller 105 controls the atmosphere in the intermediate powder storage 103 and that in the shaping chamber 101.

According to this embodiment, it is possible to supply the powder to the shaping chamber without interrupting processing of shaping the three-dimensional laminated and shaped object.

### [Second Embodiment]

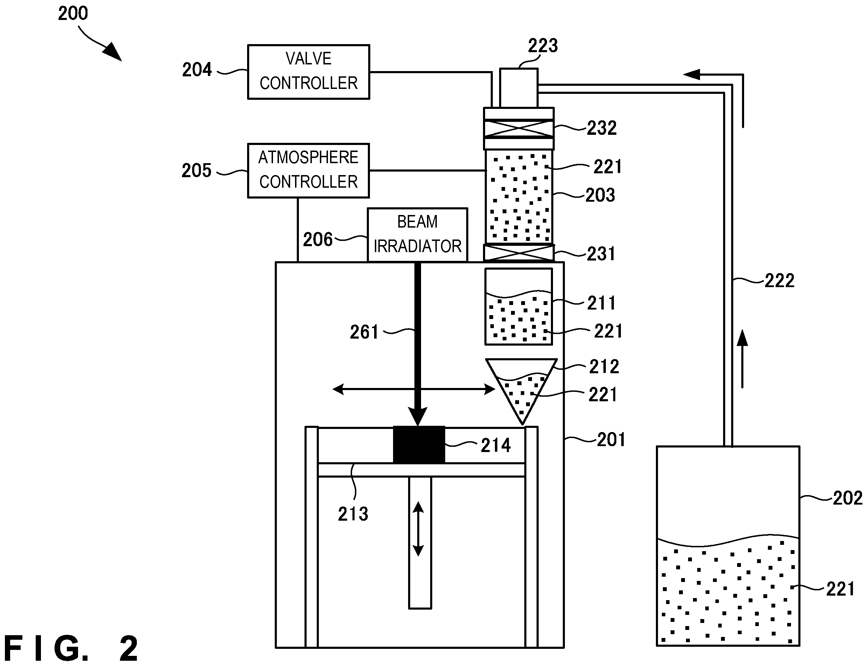

A three-dimensional laminating and shaping apparatus according to the second embodiment of the present invention will be described with reference to Fig. 2. Fig. 2 is a view for explaining the arrangement of a three-dimensional laminating and shaping apparatus 200 according to this embodiment. The three-dimensional laminating and shaping apparatus 200 includes a process chamber 201, a powder tank 202, a load lock chamber 203, a valve controller 204, an atmosphere controller 205, and a beam irradiator 206.

### «Process Chamber (Shaping Chamber)»

The process chamber 201 is a shaping chamber for a three-dimensional laminated and shaped object 214, and includes a powder supply container 211, a recoater 212, and a work 213. The powder supply container 211 supplies a powder 221 to the recoater 212. The recoater 212 spreads the supplied powder 221 over the work 213 while moving on the work 213 in the horizontal direction. The beam irradiator 206 irradiates the powder 221 spread over the work 213 with a beam 261 such as a laser beam or electron beam, and the powder 221 in a portion irradiated with the beam 261 is hardened, thereby forming the sectional shape of one layer.

Upon completion of formation of the sectional shape of one layer, the work 213 moves downward to provide a space where the powder 221 for one layer is spread, and thus the recoater 212 spreads the powder 221 for one layer. The spread powder 221 is irradiated with the beam 261, and the powder in a portion irradiated with the beam 261 is hardened, thereby further forming the sectional shape of one layer. By repeating the above processing a predetermined number of times, the desired three-dimensional laminated and shaped object 214 is shaped.

### «Powder Tank (Powder Storage)»

The powder tank 202 is a tank for storing the powder 221 to be supplied to the process chamber 201. A powder conveying path 222 is connected to the powder tank 202. The powder 221 sent from the powder tank 202 passes through the powder conveying path 222, and is finally supplied to the process chamber 201. A powder conveying pump 223 is provided at the end of the powder conveying path 222, and sucks the powder 221 from the powder tank 202 to finally convey the powder 221 to the process chamber 201.

Note that a mechanism of conveying the powder 221 is not limited to this. For example, a compressor or the like may be provided in the powder tank 202 to convey the powder 221 by force feed. Furthermore, for example, a rod-, plate-, or propeller-like stirrer which can stir or mix the powder 221 may be provided in the powder conveying pump 223. If the stirrer is used to stir or mix the powder 221, it is possible to prevent segregation of the powder 221 when the powder 221 falls into the load lock chamber 203. Note that stirring of the powder 221 is not limited to stirring using the stirrer. For example, a pump or the like may apply pressure to the powder 221 to be powerfully blown. Furthermore, in the powder conveying pump 223, the powder 221 may be selected or classified in accordance with the shaping condition or application purpose of the three-dimensional laminated and shaped object 214. The user may manually supply the powder 221 to the powder conveying pump 223.

### «Load Lock Chamber (Intermediate Powder Storage)»

The load lock chamber 203 is arranged above the process chamber 201, and provided between the powder tank 202 and the process chamber 201. The load lock chamber 203 temporarily stores the powder 221 before the powder 221 conveyed from the powder tank 202 is supplied to the process chamber 201. The powder 221 is supplied to the load lock chamber 203 from the powder tank 202 through the powder conveying path 222.

Two valves are provided in the load lock chamber 203. That is, a gate valve 231 is provided on the side of the process chamber 201, and a material supply valve 232 is provided on the side of the powder tank 202. The valve controller 204 controls opening/closing of each of the gate valve 231 and the material supply valve 232. If the material supply valve 232 is opened, the powder tank 202 and the load lock chamber 203 are connected via the powder conveying path 222, and the powder 221 is supplied from the powder tank 202 to the load lock chamber 203. If the material supply valve 232 is closed, supply of the powder 221 from the powder tank 202 to the load lock chamber 203 is cut off.

Similarly, if the gate valve 231 is opened, the process chamber 201 and the load lock chamber 203 are connected, and the powder 221 is supplied from the load lock chamber 203 to the powder supply container 211. If the material supply valve 232 is closed, supply of the powder 221 from the load lock chamber 203 to the process chamber 201 is cut off.

If a predetermined amount of the powder 221 is stored in the load lock chamber 203, the valve controller 204 closes the material supply valve 232 to stop supplying the powder 221. In this state, the gate valve 231 and the material supply valve 232 are closed, and the load lock chamber 203 is connected to none of the devices of a supply system of the powder 221.

The atmosphere controller 205 controls the atmosphere in the load lock chamber 203 so that the atmosphere in the load lock chamber 203 is the same as that in the process chamber 201. More specifically, if the process chamber 201 is evacuated, the atmosphere controller 205 evacuates the load lock chamber 203 to have the same degree of vacuum as that in the process chamber 201. Since the capacity of the load lock chamber 203 is sufficiently smaller than that of the process chamber 201, if such small space is evacuated, a gas or the like is drained from the powder 221, and thus the powder 221 never flies when it is supplied. The powder 221 having a small particle size readily flies, and is thus difficult to use. Therefore, if the chamber is evacuated, it becomes easy to use the powder 221.

By setting the equal degrees of vacuum in the load lock chamber 203 and the process chamber 201, even if the gate valve 231 is opened, the atmosphere, that is, the degree of vacuum in the process chamber 201 remains unchanged. Therefore, since it becomes unnecessary to perform processing of replenishing the process chamber 201 with the powder 221 by breaking the vacuum in the process chamber 201, and evacuating the process chamber 201 again after replenishment with the powder 221, it is possible to continuously supply the powder 221 without interrupting the shaping process.

The degree of vacuum in the load lock chamber 203 is preferably set to 6.7 Pa or less. However, the degree of vacuum is not limited to this. The degree of vacuum can be appropriately selected in accordance with the shaping condition of the three-dimensional laminated and shaped object 214, and may be set to a higher or lower degree of vacuum. If the gate valve 231 is opened after evacuation of the load lock chamber 203 is completed and the degrees of vacuum of the load lock chamber 203 and process chamber 201 become equal to each other, the powder 221 falls by its own weight. Therefore, when the valve controller 204 controls to open the gate valve 231, it is possible to automatically supply the powder 221 to the powder supply container 211.

For example, at the time of conveying the powder 221, static electricity may be generated by friction of the powder 221 or the like, thereby causing ignition. In this case, if the powder 221 is conveyed in a normal air atmosphere, oxygen (O₂) contained in the air accelerates combustion of the powder 221, which is very dangerous. If the powder 221 has high reactivity and a high risk for ignition like a metal powder, the atmosphere in the conveying path of the powder 221 is set to an atmosphere suitable for the powder 221 instead of the air atmosphere.

Note that atmosphere control of the process chamber 201 may be executed by the atmosphere controller 205 or an atmosphere control apparatus for the process chamber 201. If the atmosphere controller 205 executes atmosphere control of the process chamber 201, atmosphere control of the process chamber 201 and that of the load lock chamber 203 may be executed in synchronism with each other or individually executed.

A heater for preheating the powder 221 may be provided in the load lock chamber 203. If the powder 221 is preheated, it becomes unnecessary to preheat the powder 221 by irradiating the powder 221 with the beam 261 for preheating in the process chamber 201 or it is possible to shorten the time taken for preheating. This can shape the three-dimensional laminated and shaped object 214 without decreasing the shaping speed. The heater desirably preheats the powder to about 300°C but the present invention is not limited to this. Note that the example in which the heater for preheating is provided in the load lock chamber 203 has been explained. However, a location in which the heater is provided is not limited to this, and may be provided in, for example, the powder supply container 211 of the process chamber 201. If the heater is provided in the powder supply container 211, the size of the powder supply container 211 becomes large, and the size of the process chamber 201 also becomes large, resulting in an increase in size of the three-dimensional laminating and shaping apparatus 200. To avoid the process chamber 201 from increasing in size, the heater is preferably provided in the load lock chamber 203.

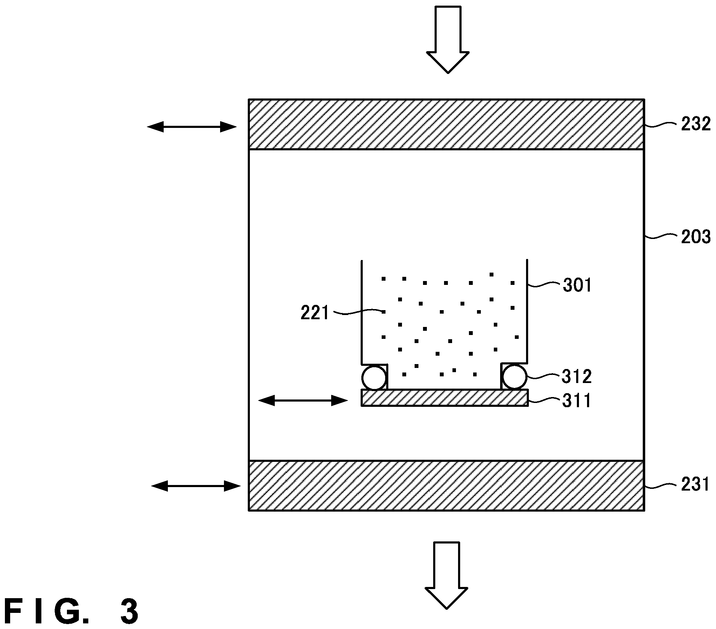

Fig. 3 is a view for explaining the arrangement of the load lock chamber of the three-dimensional laminating and shaping apparatus according to this embodiment. The load lock chamber 203 includes a powder storage container 301, a powder supply valve 311, and a weight sensor 312.

The powder storage container 301 temporarily stores the powder 221. By opening/closing the powder supply valve 311, supply of the powder 221 stored in the powder storage container 301 can be adjusted. The weight sensor 312 is a sensor capable of measuring the weight of the powder 221 or the like. A load cell is typically used as the weight sensor 312. However, the present invention is not limited to this, and any device capable of measuring the weight can be used. Since the powder supply valve 311 need only bear the weight of the powder 221 stored in the powder storage container 301, its thickness is smaller than that of the gate valve 231.

If the predetermined amount of the powder 221 is supplied from the powder tank 202 to the powder storage container 301 of the load lock chamber 203, the valve controller 204 closes the material supply valve 232, and the atmosphere controller 205 executes atmosphere control. After that, upon completion of the atmosphere control, the valve controller 204 opens the gate process chamber 201.

If the weight sensor 312 detects a predetermined weight change, for example, an increase in the weight of the powder 221 by a preset amount, the valve controller 204 closes the gate valve 231 and the powder supply valve 311 to stop supplying the powder 221 to the process chamber 201. If the weight sensor 312 is used to detect the supply amount of the powder 221, the necessary amount of the powder 221 for shaping of the three-dimensional laminated and shaped object can be correctly supplied. Thus, the powder 221 is not wastefully supplied or wastefully consumed. Furthermore, since the weight sensor 312 is used to measure the weight of the powder 221, it is possible to reliably grasp whether the powder storage container 301 becomes empty. It is also possible to omit the labor to recover the powder 221 which was not used for shaping of the three-dimensional laminated and shaped object.

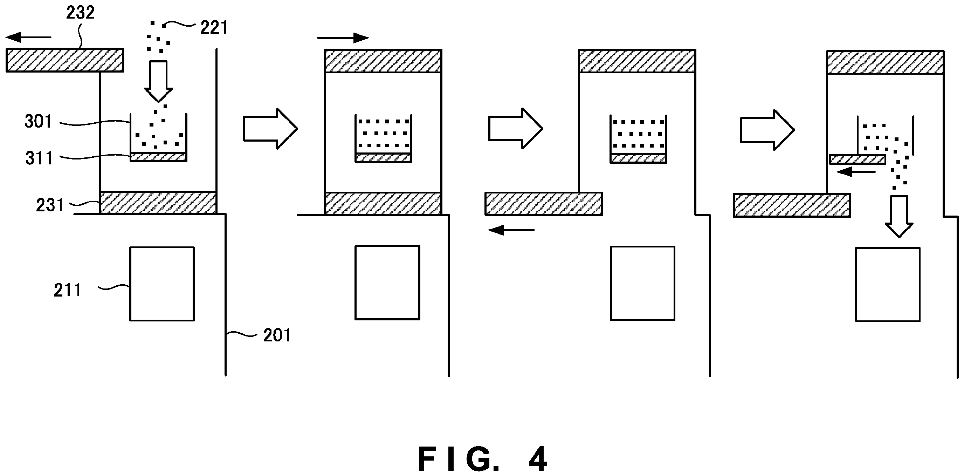

Fig. 4 is a view for explaining an overview of powder supply from the load lock chamber to the process chamber in the three-dimensional laminating and shaping apparatus according to this embodiment.

At the end of supply of the powder 221 to the load lock chamber 203, the valve controller 204 closes the material supply valve 232. At the end of the atmosphere control of the load lock chamber 203 by the atmosphere controller 205, the valve controller 204 opens the gate valve 231 and the powder supply valve 311. A detailed description will be provided below.

The valve controller 204 opens the material supply valve 232, and the powder 221 conveyed from the powder tank 202 by passing through the powder conveying path 222 is conveyed to the load lock chamber 203, and stored in the powder storage container 301.

If the predetermined amount of the powder 221 is stored in the powder storage container 301, the valve controller 204 closes the material supply valve 232 to seal the load lock chamber 203.

If the load lock chamber 203 is sealed, the atmosphere controller 205, for example, evacuates the atmosphere in the load lock chamber 203. If the degree of vacuum in the load lock chamber 203 reaches a predetermined degree of vacuum, the atmosphere controller 205 stops the atmosphere control.

The valve controller 204 opens the gate valve 231, and subsequently opens the powder supply valve 311. If the powder supply valve 311 is opened, the powder 221 automatically falls by its own weight, and is supplied to the powder supply container 211. If a predetermined amount of the powder 221 is supplied to the powder supply container 211, the valve controller 204 closes the gate valve 231 and the powder supply valve 311 to stop supplying the powder 221 from the load lock chamber 203 to the process chamber 201.

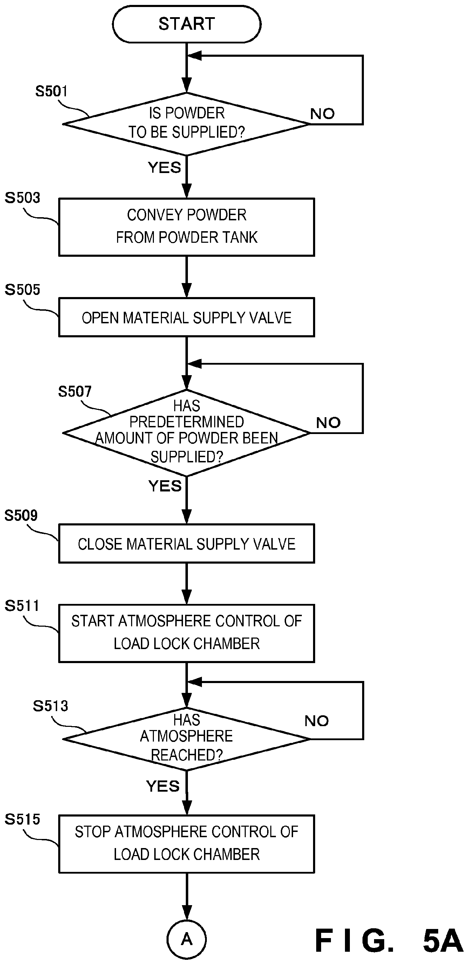

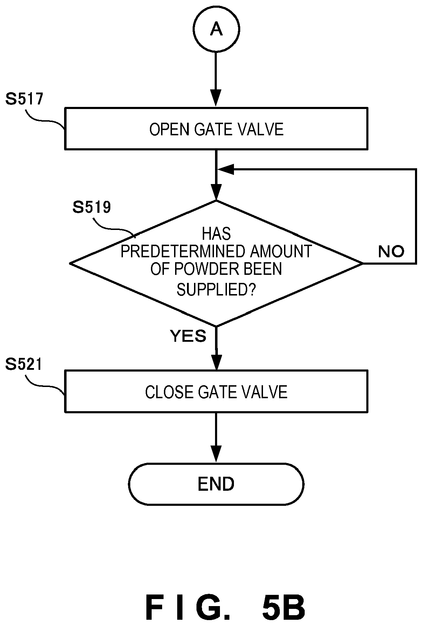

Figs. 5A and 5B are flowcharts for explaining the powder supply processing procedure of the three-dimensional laminating and shaping apparatus according to this embodiment.

In the three-dimensional laminating and shaping apparatus 200, at the start of shaping, the powder supply container 211 is full of the powder 221, and the gate valve 231 is closed. If the process chamber 201 is, for example, evacuated, and the evacuation is complete, the three-dimensional laminating and shaping apparatus 200 starts shaping of the three-dimensional laminated and shaped object 214. If the process chamber 201 is evacuated while the powder supply container 211 is filled with the powder 221, the powder 221 may spatter in the process chamber 201. Thus, the process chamber 201 may be evacuated while the powder supply container 211 is not filled with the powder 221.

In step S501, the three-dimensional laminating and shaping apparatus 200 determines whether it is necessary to supply the powder 221 to the powder supply container 211. If it is not necessary to supply the powder 221 (NO in step S501), the three-dimensional laminating and shaping apparatus 200 stands by until it becomes necessary to supply the powder 221.

If it is determined that it is necessary to supply the powder 221 (YES in step S501), the three-dimensional laminating and shaping apparatus 200 conveys, in step S503, the powder 221 from the powder tank 202 to the load lock chamber 203 through the powder conveying path 222.

In step S505, the valve controller 204 opens the material supply valve 232 to convey the powder 221 to the load lock chamber 203. In step S507, the three-dimensional laminating and shaping apparatus 200 determines whether the predetermined amount of the powder 221 has been supplied to the load lock chamber 203. If the predetermined amount of the powder 221 has not been supplied (NO in step S507), the three-dimensional laminating and shaping apparatus 200 stands by until the predetermined amount of the powder 221 is supplied.

If the predetermined amount of the powder 221 has been supplied to the load lock chamber 203 (YES in step S507), the valve controller 204 closes the material supply valve 232 to stop supplying the powder 221, and seals the load lock chamber 203.

In step S511, the atmosphere controller 205 controls to, for example, evacuate the atmosphere in the load lock chamber 203. If the degree of vacuum of the load lock chamber 203 reaches a predetermined degree of vacuum, for example, the degree of vacuum of the process chamber 201, the atmosphere controller 205 stops the atmosphere control of the load lock chamber 203. When the atmosphere control by the atmosphere controller 205 is evacuation, even if the predetermined degree of vacuum is reached, evacuation may be continued.

In step S513, the atmosphere controller 205 determines whether the atmosphere in the load lock chamber 203 has reached a predetermined atmosphere. If the predetermined atmosphere has not been reached (NO in step S513), the atmosphere controller 205 stands by until the atmosphere in the load lock chamber 203 reaches the predetermined atmosphere.

If the atmosphere in the load lock chamber 203 has reaches the predetermined atmosphere (YES in step S513), the atmosphere controller 205 stops the atmosphere control of the load lock chamber 203 in step S515.

In step S517, the valve controller 204 opens the gate valve 231 to supply the powder 221 from the load lock chamber 203 to the powder supply container 211 in the process chamber 201.

In step S519, the valve controller 204 determines whether the predetermined amount of the powder 221 has been supplied to the powder supply container 211 of the process chamber 201. If the predetermined amount of the powder 221 has not been supplied to the powder supply container 211 of the process chamber 201 (NO in step S519), the valve controller 204 stands by until the predetermined amount of the powder 221 is supplied.

If the predetermined amount of the powder 221 has been supplied to the powder supply container 211 of the process chamber 201 (YES in step S519), the valve controller 204 closes the gate valve 231 in step S521, thereby stopping supplying the powder 221.

Note that this embodiment has described the example in which the load lock chamber 203 is arranged above the powder supply container 211. However, the arrangement of these components is not limited to this. For example, the load lock chamber 203 and the powder supply container 211 may be arranged side by side. In this case, the powder 221 cannot fall from the load lock chamber 203 to the powder supply container 211 by its own weight, and thus a mechanism of supplying the powder 221 to the powder supply container 211 may be provided in the load lock chamber 203.

According to this embodiment, since atmosphere control is executed so that the atmosphere in the process chamber 201 and that in the load lock chamber 203 are the same, it is possible to supply the powder to the shaping chamber without interrupting the processing of shaping the three-dimensional laminated and shaped object. In addition, since it is possible to continuously supply the powder without interrupting the processing of shaping the three-dimensional laminated and shaped object, the processing of shaping the three-dimensional laminated and shaped object can be speeded up.

### [Third Embodiment]

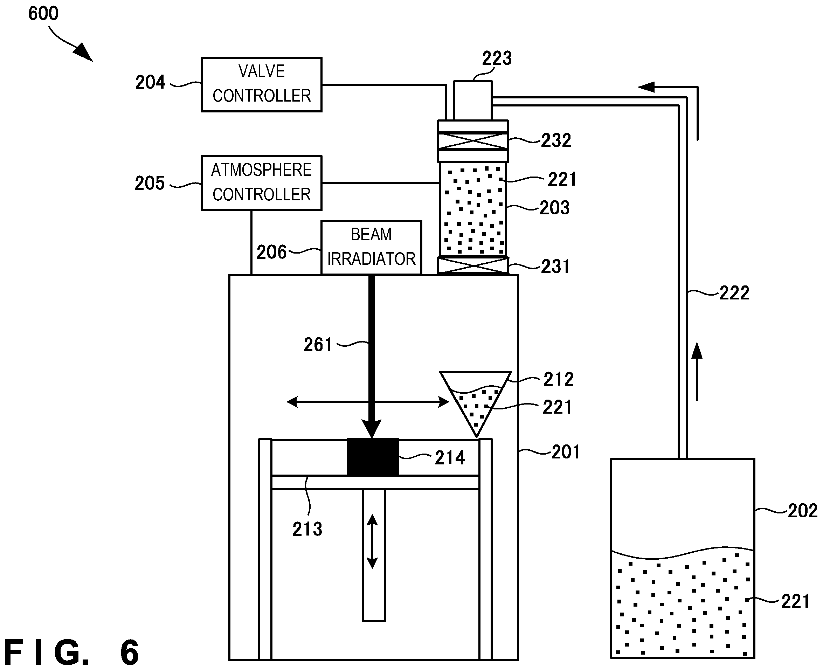

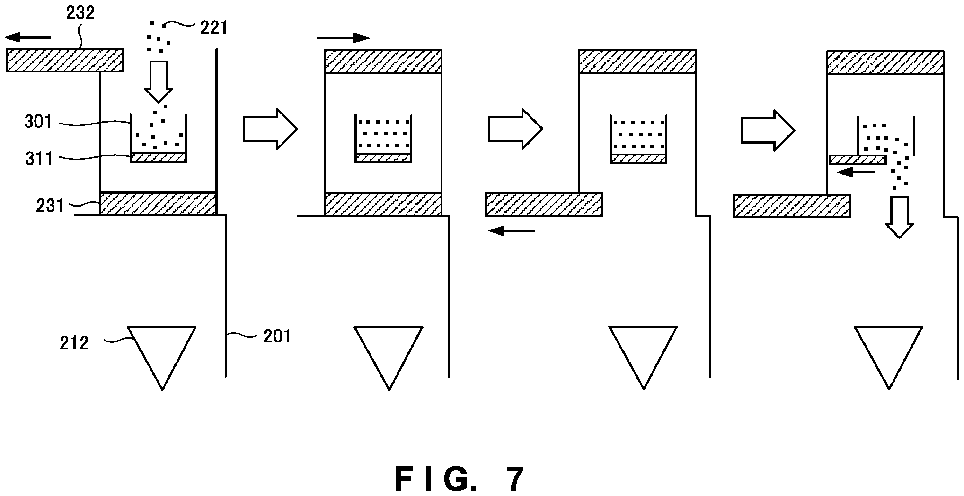

A three-dimensional laminating and shaping apparatus 600 according to the third embodiment of the present invention will be described with reference to Figs. 6 and 7. Fig. 6 is a view for explaining the arrangement of the three-dimensional laminating and shaping apparatus 600 according to this embodiment. The three-dimensional laminating and shaping apparatus 600 according to this embodiment is different from the second embodiment in that no powder supply container is included. The remaining components and operations are the same as those in the second embodiment. Hence, the same reference numerals denote the same components and operations, and a detailed description thereof will be omitted.

The three-dimensional laminating and shaping apparatus 600 includes a process chamber 201, a powder tank 202, and a load lock chamber 203. The process chamber 201 is a shaping chamber for a three-dimensional laminated and shaped object 214, and includes a recoater 212 and a work 213.

A powder 221 is conveyed from the powder tank 202, and the load lock chamber 203 storing the powder 221 is exhausted by atmosphere control by an atmosphere controller 205, for example, by evacuation until the load lock chamber 203 has a degree of vacuum equal to that of the process chamber 201. If the degree of vacuum of the load lock chamber 203 is equal to that of the process chamber 201, the valve controller 204 opens a gate valve 231, the powder 221 falls by its own weight, and the recoater 212 is directly replenished with the powder 221. The recoater 212 replenished with the powder 221 spreads the powder 221 on the work 213.

Fig. 7 is a view for explaining an overview of powder supply from the load lock chamber to the process chamber in the three-dimensional laminating and shaping apparatus according to this embodiment. If the gate valve 231 and a powder supply valve 311 are opened, the powder 221 falls by its own weight. The powder 221 which has fallen is directly supplied from the load lock chamber 203 to the recoater 212 in the process chamber 201.

According to this embodiment, since the powder supply container 211 is eliminated so as to directly supply the powder 221 to the recoater 212, processing of shaping a three-dimensional laminated and shaped object can be further speeded up.

### [Other Embodiments]

While the present invention has been described with reference to exemplary embodiments, it is to be understood that the invention is not limited to the disclosed exemplary embodiments.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A three-dimensional laminating and shaping apparatus (100; 200; 600) comprising:
a shaping chamber (101; 201) in which a three-dimensional laminated and shaped object (111; 214) is shaped;
a powder storage (102; 202) that stores a powder (121; 221) conveyed to said shaping chamber (101; 201);
an intermediate powder storage (103; 203) that is provided between said shaping chamber (101; 201) and said powder storage (102; 202), is connected to said shaping chamber (101; 201) via a first valve (131; 231), is connected to said powder storage (102; 202) via a second valve (132; 232), and temporarily stores the powder (121; 221);
**characterized by**
a valve controller (104;204) that controls opening/closing of each of the first valve (131; 231) and the second valve (132; 232); and
an atmosphere controller (105; 205) that controls an atmosphere in said intermediate powder storage (103; 203) and an atmosphere in said shaping chamber (101; 201) to be the same degree of vacuum.

2. The three-dimensional laminating and shaping apparatus (100; 200; 600) according to claim 1, wherein said intermediate powder storage (103; 203) is arranged above said shaping chamber (101; 201).

3. The three-dimensional laminating and shaping apparatus (100; 200; 600) according to claim 1 or 2, wherein
said intermediate powder storage (103; 203) further includes a third valve (311) between the first valve (131; 231) and the second valve (132; 232), and
said valve controller (104; 204) controls the first valve (131; 231) and said third valve (311) to supply the powder (121; 221) from said intermediate powder storage (103; 203) to said shaping chamber (101; 201).

4. The three-dimensional laminating and shaping apparatus (100; 200; 600) according to claim 3, wherein said valve controller (104; 204)
closes the second valve (132; 232) at the end of supply of the powder (121; 221) to said intermediate powder storage (103; 203), and
opens the first valve (131; 231) and said third valve (311) at the end of atmosphere control of said intermediate powder storage (103; 203).

5. The three-dimensional laminating and shaping apparatus (100; 200; 600) according to any one of claims 1 to 4, wherein
said intermediate powder storage (103; 203) further includes a weight measurer (312) that measures a weight of the powder (121; 221), and
if said weight measurer (312) detects a predetermined weight change, said valve controller (104; 204) closes the first valve (131; 231).

6. The three-dimensional laminating and shaping apparatus (100; 200; 600) according to any one of claims 1 to 5, wherein said intermediate powder storage (103; 203) further includes a heater.

7. The three-dimensional laminating and shaping apparatus (100; 200; 600) according to any one of claims 1 to 6, further comprising:
a powder conveyor (222, 223) that conveys the powder (121; 221) from said powder storage (102; 202) to said intermediate powder storage (103; 203).

8. The three-dimensional laminating and shaping apparatus (100; 200; 600) according to claim 7, wherein said powder conveyor (222, 223) includes a stirrer that stirs the powder (121; 221).

9. The three-dimensional laminating and shaping apparatus (100; 200; 600) according to any one of claims 1 to 8, wherein
said shaping chamber (101; 201) further includes a powder spreader (212) that spreads the powder (121; 221), and a powder supplier (211) that supplies the powder (121; 221) to said powder spreader (212),
said powder supplier (211) includes a supply amount detector (312) that detects a supply amount of the powder (121; 221), and
if said supply amount detector (312) detects supply of a predetermined amount of the powder (121; 221), said powder supplier (211) is replenished with the powder (121; 221) from said intermediate powder storage (103; 203).

10. The three-dimensional laminating and shaping apparatus (100; 200; 600) according to claim 1, wherein the degree of vacuum is not higher than 6.7 Pa.

11. A control method of a three-dimensional laminating and shaping apparatus (100; 200; 600) defined in claim 1, comprising:
sending the powder (121; 221) from the powder storage (102; 202) to the intermediate powder storage (103; 203);
temporarily storing, in the intermediate powder storage (103; 203), the powder (121; 221) sent from the powder storage (102; 202); and
controlling an atmosphere in the intermediate powder storage (103; 203) and an atmosphere in the shaping chamber (101; 201) to be the same degree of vacuum.

12. A control program for causing a three-dimensional laminating and shaping apparatus (100; 200; 600) defined in claim 1, to execute a method, comprising:
sending the powder (121; 221) from the powder storage (102; 202) to the intermediate powder storage (103; 203);
temporarily storing, in the intermediate powder storage (103; 203), the powder (121; 221) sent from the powder storage (102; 202); and
controlling an atmosphere in the intermediate powder storage (103; 203) and an atmosphere in the shaping chamber (101; 201) to be the same degree of vacuum.

## Patentansprüche

1. Vorrichtung (100; 200; 600) zum dreidimensionalen Schichten und Formen, mit:
einer Formungskammer (101; 201), in welcher ein dreidimensional geschichtetes und geformtes Objekt (111; 214) geformt wird;
einem Pulverspeicher (102; 202), der ein Pulver (121; 221) speichert, das zu der Formungskammer (101; 201) gefördert wird;
einem Pulverzwischenspeicher (103; 203), der zwischen der Formungskammer (101; 201) und dem Pulverspeicher (102; 202) vorgesehen ist, über ein erstes Ventil (131; 231) mit der Formungskammer (101; 201) verbunden ist, über ein zweites Ventil (132; 232) mit dem Pulverspeicher (102; 202) verbunden ist und das Pulver (121; 221) vorübergehend speichert; **gekennzeichnet durch**
eine Ventilsteuerung (104; 204), die ein Öffnen/Schließen sowohl des ersten Ventils (131; 231) als auch des zweiten Ventils (132; 232) steuert; und
einer Atmosphärensteuerung (105; 205), die eine Atmosphäre in dem Pulverzwischenspeicher (103; 203) und eine Atmosphäre in der Formungskammer (101; 201) steuert, um den gleichen Vakuumgrad zu haben.

2. Vorrichtung (100; 200; 600) zum dreidimensionalen Schichten und Formen nach Anspruch 1, wobei der Pulverzwischenspeicher (103; 203) oberhalb der Formungskammer (101; 201) angeordnet ist.

3. Vorrichtung (100; 200; 600) zum dreidimensionalen Schichten und Formen nach Anspruch 1 oder 2, wobei
der Pulverzwischenspeicher (103; 203) ferner ein drittes Ventil (311) zwischen dem ersten Ventil (131; 231) und dem zweiten Ventil (132; 232) aufweist und
die Ventilsteuerung (104; 204) das erste Ventil (131; 231) und das dritte Ventil (311) steuert, um das Pulver (121; 221) aus dem Pulverzwischenspeicher (103; 203) zu der Formungskammer (101; 201) zuzuführen.

4. Vorrichtung (100; 200; 600) zum dreidimensionalen Schichten und Formen nach Anspruch 3, wobei die Ventilsteuerung (104; 204)
das zweite Ventil (132; 232) bei dem Ende des Zuführens des Pulvers (121; 221) zu dem Pulverzwischenspeicher (103; 203) schließt und
das erste Ventil (131; 231) und das dritte Ventil (311) bei dem Ende der Atmosphärensteuerung des Pulverzwischenspeichers (103; 203) öffnet.

5. Vorrichtung (100; 200; 600) zum dreidimensionalen Schichten und Formen nach einem der Ansprüche 1 bis 4, wobei
der Pulverzwischenspeicher (103; 203) ferner ein Gewichtsmessgerät (312) aufweist, das ein Gewicht des Pulvers (121; 221) misst, und
die Ventilsteuerung (104; 204) das erste Ventil (131; 231) schließt, falls das Gewichtsmessgerät (312) eine vorbestimmte Gewichtsänderung erfasst.

6. Vorrichtung (100; 200; 600) zum dreidimensionalen Schichten und Formen gemäß einem der Ansprüche 1 bis 5, wobei der Pulverzwischenspeicher (103; 203) ferner eine Heizeinrichtung aufweist.

7. Vorrichtung (100; 200; 600) zum dreidimensionalen Schichten und Formen nach einem der Ansprüche 1 bis 6, ferner mit:
einem Pulverförderer (222, 223), der das Pulver (121; 221) aus dem Pulverspeicher (102; 202) zu dem Pulverzwischenspeicher (103; 203) fördert.

8. Vorrichtung (100; 200; 600) zum dreidimensionalen Schichten und Formen nach Anspruch 7, wobei der Pulverförderer (222, 223) einen Rührer aufweist, der das Pulver (121; 221) rührt.

9. Vorrichtung (100; 200; 600) zum dreidimensionalen Schichten und Formen nach einem der Ansprüche 1 bis 8, wobei
die Formungskammer (101; 201) ferner einen Pulververteiler (212), der das Pulver (121; 221) verteilt, und einen Pulverzuführer (211) aufweist, der das Pulver (121; 221) zu dem Pulververteiler (212) zuführt,
der Pulverzuführer (211) einen Zuführmengendetektor (312) aufweist, der eine Zuführmenge des Pulvers (121; 221) erfasst, und
der Pulverzuführer (211) mit dem Pulver (121; 221) aus dem Pulverzwischenspeicher (103; 203) befüllt wird, wenn der Zuführmengendetektor (312) ein Zuführen einer vorbestimmten Menge des Pulvers (121; 221) erfasst.

10. Vorrichtung (100; 200; 600) zum dreidimensionalen Schichten und Formen nach Anspruch 1, wobei der Vakuumgrad nicht höher als 6,7 Pa ist.

11. Steuerungsverfahren einer Vorrichtung (100; 200; 600) zum dreidimensionalen Schichten und Formen, die in Anspruch 1 definiert ist, mit:
einem Liefern des Pulvers (121; 221) aus dem Pulverspeicher (102; 202) zu dem Pulverzwischenspeicher (103; 203);
einem vorübergehenden Speichern des Pulvers (121; 221), das von dem Pulverspeicher (102; 202) geliefert wird, in dem Pulverzwischenspeicher (103; 203); und
einem Steuern einer Atmosphäre in dem Pulverzwischenspeicher (103; 203) und einer Atmosphäre in der Formungskammer (101; 201), um den gleichen Vakuumgrad zu haben.

12. Steuerungsprogramm zum Veranlassen einer Vorrichtung (100; 200; 600) zum dreidimensionalen Schichten und Formen, die in Anspruch 1 definiert ist, um ein Verfahren auszuführen, mit:
einem Liefern des Pulvers (121; 221) aus dem Pulverspeicher (102; 202) zu dem Pulverzwischenspeicher (103; 203);
einem vorübergehenden Speichern des Pulvers (121; 221), das von dem Pulverspeicher (102; 202) geliefert wird, in dem Pulverzwischenspeicher (103; 203); und
einem Steuern einer Atmosphäre in dem Pulverzwischenspeicher (103; 203) und einer Atmosphäre in der Formungskammer (101; 201), um den gleichen Vakuumgrad zu haben.

## Revendications

1. Appareil de stratification et de façonnage en trois dimensions (100 ; 200 ; 600) comprenant :
une chambre de façonnage (101 ; 201) dans laquelle est façonné un objet stratifié et façonné en trois dimensions (111 ; 214) ;
un stockage de poudre (102 ; 202) qui stocke une poudre (121 ; 221) transportée vers ladite chambre de façonnage (101 ; 201) ;
un stockage intermédiaire de poudre (103 ; 203) qui est prévu entre ladite chambre de façonnage (101 ; 201) et ledit stockage de poudre (102 ; 202), qui est relié à ladite chambre de façonnage (101 ; 201) via une première vanne (131 ; 231), qui est relié audit stockage de poudre (102 ; 202) via une deuxième vanne (132 ; 232), et qui stocke temporairement la poudre (121 ; 221) ; **caractérisé par**
un dispositif de commande de vanne (104 ; 204) qui commande l'ouverture/la fermeture de chacune parmi la première vanne (131 ; 231) et la deuxième vanne (132 ; 232) ; et
un dispositif de commande d'atmosphère (105 ; 205) qui commande une atmosphère dans ledit stockage intermédiaire de poudre (103 ; 203) et une atmosphère dans ladite chambre de façonnage (101 ; 201) pour avoir le même degré de vide.

2. Appareil de stratification et de façonnage en trois dimensions (100 ; 200 ; 600) selon la revendication 1, dans lequel ledit stockage intermédiaire de poudre (103 ; 203) est agencé au-dessus de ladite chambre de façonnage (101 ; 201).

3. Appareil de stratification et de façonnage en trois dimensions (100 ; 200 ; 600) selon la revendication 1 ou 2, dans lequel
ledit stockage intermédiaire de poudre (103 ; 203) comporte en outre une troisième vanne (311) entre la première vanne (131 ; 231) et la deuxième vanne (132 ; 232), et
ledit dispositif de commande de vanne (104 ; 204) commande la première vanne (131 ; 231) et ladite troisième vanne (311) pour une alimentation en poudre (121 ; 221), allant dudit stockage intermédiaire de poudre (103 ; 203) à ladite chambre de façonnage (101 ; 201).

4. Appareil de stratification et de façonnage en trois dimensions (100 ; 200 ; 600) selon la revendication 3, dans lequel ledit dispositif de commande de vanne (104 ; 204)
ferme la deuxième vanne (132 ; 232) à la fin de l'alimentation en poudre (121 ; 221) dudit stockage intermédiaire de poudre (103 ; 203), et
ouvre la première vanne (131 ; 231) et ladite troisième vanne (311) à la fin de la commande d'atmosphère dudit stockage intermédiaire de poudre (103 ; 203).

5. Appareil de stratification et de façonnage en trois dimensions (100 ; 200 ; 600) selon l'une quelconque des revendications 1 à 4, dans lequel
ledit stockage intermédiaire de poudre (103 ; 203) comporte en outre un mesureur de poids (312) qui mesure un poids de la poudre (121 ; 221), et
si ledit mesureur de poids (312) détecte une modification prédéterminée de poids, ledit dispositif de commande de vanne (104 ; 204) ferme la première vanne (131 ; 231).

6. Appareil de stratification et de façonnage en trois dimensions (100 ; 200 ; 600) selon l'une quelconque des revendications 1 à 5, dans lequel ledit stockage intermédiaire de poudre (103 ; 203) comporte en outre un élément chauffant.

7. Appareil de stratification et de façonnage en trois dimensions (100 ; 200 ; 600) selon l'une quelconque des revendications 1 à 6, comprenant en outre :
un transporteur de poudre (222, 223) qui transporte la poudre (121 ; 221) dudit stockage de poudre (102 ; 202) audit stockage intermédiaire de poudre (103 ; 203).

8. Appareil de stratification et de façonnage en trois dimensions (100 ; 200 ; 600) selon la revendication 7, dans lequel ledit transporteur de poudre (222, 223) comporte un brasseur qui brasse la poudre (121 ; 221).

9. Appareil de stratification et de façonnage en trois dimensions (100 ; 200 ; 600) selon l'une quelconque des revendications 1 à 8, dans lequel
ladite chambre de façonnage (101 ; 201) comporte en outre un épandeur de poudre (212) qui répand la poudre (121 ; 221), et une alimentation de poudre (211) qui alimente ledit épandeur de poudre (212) en poudre (121 ; 221),
ladite alimentation de poudre (211) comporte un détecteur de quantité d'alimentation (312) qui détecte une quantité d'alimentation en poudre (121 ; 221), et
si ledit détecteur de quantité d'alimentation (312) détecte une alimentation d'une quantité prédéterminée en poudre (121 ; 221), ladite alimentation de poudre (211) est réapprovisionnée en poudre (121 ; 221) à partir dudit stockage intermédiaire de poudre (103 ; 203).

10. Appareil de stratification et de façonnage en trois dimensions (100 ; 200 ; 600) selon la revendication 1, dans lequel le degré de vide n'est pas supérieur à 6,7 Pa.

11. Procédé de commande d'un appareil de stratification et de façonnage en trois dimensions (100 ; 200 ; 600) défini dans la revendication 1, comprenant les étapes consistant à :
acheminer la poudre (121 ; 221) du stockage de poudre (102 ; 202) au stockage intermédiaire de poudre (103 ; 203) ;
stocker temporairement, dans le stockage intermédiaire de poudre (103 ; 203), la poudre (121 ; 221) acheminée à partir du stockage de poudre (102 ; 202) ; et
commander une atmosphère dans le stockage intermédiaire de poudre (103 ; 203) et une atmosphère dans la chambre de façonnage (101 ; 201) pour avoir le même degré de vide.

12. Programme de commande, pour amener un appareil de stratification et de façonnage en trois dimensions (100 ; 200 ; 600) défini dans la revendication 1, à exécuter un procédé comprenant les étapes consistant à :
acheminer la poudre (121 ; 221) du stockage de poudre (102 ; 202) au stockage intermédiaire de poudre (103 ; 203) ;
stocker temporairement, dans le stockage intermédiaire de poudre (103 ; 203), la poudre (121 ; 221) acheminée à partir du stockage de poudre (102 ; 202) ; et
commander une atmosphère dans le stockage intermédiaire de poudre (103 ; 203) et une atmosphère dans la chambre de façonnage (101 ; 201) pour avoir le même degré de vide.
